# EUROPÄISCHE PATENTSCHRIFT

(11) **EP 1 584 504 B1**
(45) Veröffentlichungstag und Bekanntmachung des Hinweises auf die Patenterteilung: **02.05.2007**
(21) Anmeldenummer: 04290945.7
(22) Anmeldetag: 07.04.2004
(51) Int. Cl.: B60H 1/00, B60H 1/22, H04B 3/54

(54) **Steuerung für einen elektrischen Zuheizer einer Kraftfahrzeug-Klimaanlage**
Control device for a vehicle air-conditioning electric additional heating
Système de contrôle pour chauffage électrique additionnel d'une climatisation de véhicule

(43) Veröffentlichungstag der Anmeldung: 12.10.2005
(73) Patentinhaber: Behr France Rouffach SAS, 68250 Rouffach (FR)
(72) Erfinder: Brun, MIchel, 68740 Rustenhart (FR); Delamarche, Jean-Luc, 68520 Burnhaupt le bas (FR); Miss, Pascal, 67600 Sélestat (FR); Mougey, Mathieu, 68190 Ensisheim (FR); Mundel, Maxime, 68250 Pfaffenheim (FR); Schmittheisler, Christophe, 67680 Epfig (FR)
(74) Vertreter: Nestler, Jan Hendrik

(56) Entgegenhaltungen:
- EP-A- 0 836 286
- EP-A- 0 991 537
- CH-A- 643 095
- DE-A- 10 054 943
- DE-A- 19 948 765

## Beschreibung

Die Erfindung betrifft eine Steuerung für einen elektrischen Zuheizer einer Kraftfahrzeug-Klimaanlage gemäß dem Oberbegriff des Anspruchs 1 sowie ein Verfahren zum Betreiben einer derartigen Steuerung.

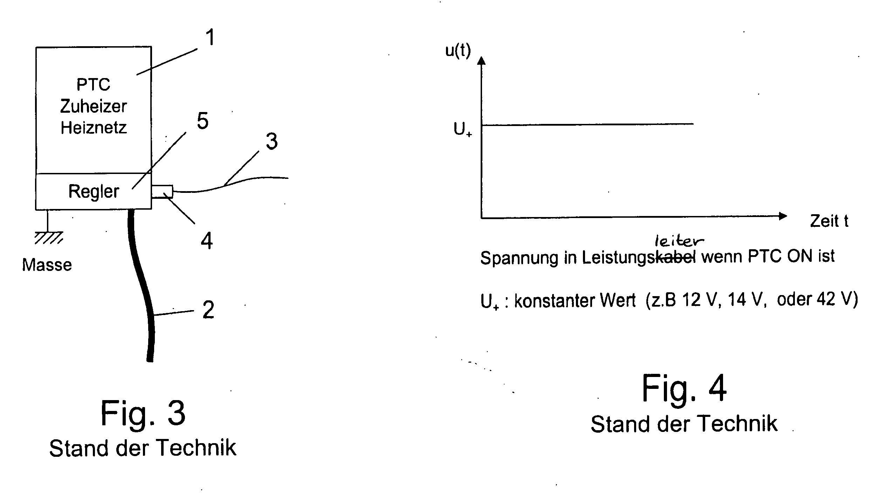

Gemäß dem Stand der Technik werden zur Steuerung elektrisch betriebener Heizungseinrichtungen von Kraftfahrzeug-Klimaanlagen, wie insbesondere PTC-Zuheizern, Bus-Systeme verwendet, die mit einem entsprechenden Fahrzeug-Datennetzwerk verbunden sind. Ein Beispiel einer derartigen Steuerung und der Energieversorgung des PTC-Zuheizers 1 ist in den Figuren 3 und 4 dargestellt. Hierbei sind ein Energieversorgungs-Leiter 2 für die Energieversorgung des PTC-Zuheizers 1, welcher ein Heiznetz aufweist, und ein Steuerungsleiter 3 mit einem Bus-Stecker 4 für die Steuerung an einem Regler 5 des PTC-Zuheizers 1 angeschlossen. Die Spannung U₊ im Energieversorgungs-Leiter 2 bleibt über die Zeit t bei eingeschalteter Zuheizung konstant abgesehen vom An- und Abschalten, wie im Diagramm von Fig. 4 dargestellt.

Dokument EP 0991537 B1, das als nächstliegender Stand der Technik gilt, offenbart eine derartige Steuerung.

Eine derartige Steuerung lässt noch Wünsche offen.

Es ist Aufgabe der Erfindung, eine Steuerung für einen elektrischen Zuheizer einer Kraftfahrzeug-Klimaanlage der eingangs genannten Art zu verbessern.

Diese Aufgabe wird gelöst durch eine Steuerung für einen elektrischen Zuheizer einer Kraftfahrzeug-Klimaanlage mit den Merkmalen des Anspruchs 1.

Erfindungsgemäß ist eine Steuerung für einen elektrischen Zuheizer einer Kraftfahrzeug-Klimaanlage vorgesehen, bei der das Energieversorgungs-Leiter gleichzeitig das Steuerungsleiter ist. Dadurch entfällt ein getrennt ausgebildetes Steuerungsleiter und das Erfordernis eines Bus-Steckers für dasselbe. Die Trennung von Energieversorgungs-Spannung und Steuersignalen in Form von Spannungsänderungen erfolgt durch einen Regler.

Bei eingeschaltetem Zuheizer weisen die Steuersignale die Form von Spannungsveränderungen der Energieversorgungs-Spannung (U₊) auf. Liegt keine Energieversorgungs-Spannung an, so werden dem Regler lediglich Steuersignale zugeführt.

Die Steuersignale weisen bevorzugt eine Amplitude in einem Verhältnis zur normalen Energieversorgungs-Spannung ohne überlagerte Steuersignale von kleiner oder gleich 0,1 auf. Derartige Spannungsänderungen können zum Einen leicht erkannt werden, beeinflussen jedoch zum Anderen die Funktion des Zuheizers nicht wesentlich.

Bevorzugt haben die Steuersignale einen rechteckförmigen Verlauf über der Zeit, so dass sie einfach erkannt werden können, jedoch sind auch andere Verläufe möglich.

Der elektrische Zuheizer ist bevorzugt ein PTC-Zuheizer, jedoch sind auch andere elektrische Heizeinrichtungen möglich.

Die unmodulierte Energieversorgungs-Spannung, das heißt ohne Steuersignale, beträgt bevorzugt 12V+/-1V, 14+/-1V, 24V+/-1V oder 42V+/-1V, entspricht also der normalen Bordspannung.

Im Folgenden wird die Erfindung anhand eines Ausführungsbeispiels unter Bezugnahme auf die Zeichnung im Einzelnen erläutert. Es zeigen:
- Fig. 1: eine schematische Ansicht eines PTC-Zuheizers gemäß dem Ausführungsbeispiel,
- Fig. 2: den Spannungsverlauf im Energieversorgungs-Kabel von Fig. 1,
- Fig. 3: eine schematische Ansicht eines PTC-Zuheizers gemäß dem Stand der Technik, und
- Fig. 4: den Spannungsverlauf im Energieversorgungs-Kabel von Fig. 3 gemäß dem Stand der Technik.

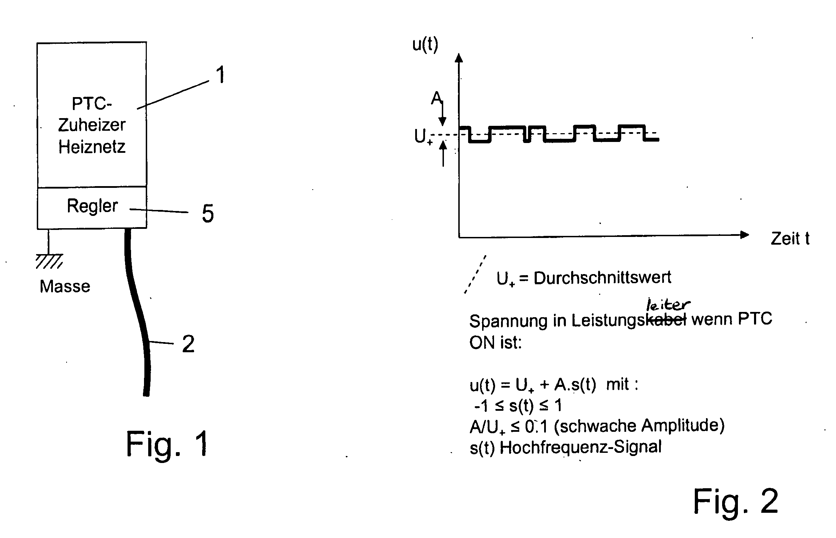

Fig. 1 zeigt als elektrischen Zuheizer einer Kraftfahrzeug-Klimaanlage einen PTC-Zuheizer 1 mit einem Energieversorgungs-Leiter 2 für die Energieversorgung des PTC-Zuheizers 1, welcher ein Heiznetz für die Wärmeerzeugung aufweist. Das Energieversorgungs-Leiter 2 legt bei Bedarf eine Spannung U₊ von 12V am PTC-Zuheizer 1 an.

Für die Steuerung des PTC-Zuheizers 1 ist ein Regler 5 vorgesehen, zu welchem das Energieversorgungs-Kabel 2 geführt ist. Über das Energieversorgungs-Leiter 2 werden -der Spannung U₊ überlagert - auch Steuersignale in Form von rechteckförmigen Spannungsmodulationen Spannungsänderungen mit einer Amplitude A übertragen, das heißt, dass Energieversorgungs-Leiter 2 dient gleichzeitig als Steuerungsleiter. Hierbei beträgt das Verhältnis der Amplitude A zur Energieversorgungs-Spannung U₊ 0,1. Die Steuersignale werden als Hochfrequenz-Signale übertragen. In Fig. 2 ist der Zustand dargestellt, wenn der PTC-Zuheizer 1 angeschaltet ist.

### Bezugszeichenliste

- 1: PTC-Zuheizer
- 2: Energieversorgungs-Leiter
- 3: Steuerungsleiter
- 4: Bus-Stecker
- 5: Regler

- A: Amplitude
- t: Zeit
- U₊: Spannung

## Patentansprüche

1. Steuerung für einen elektrischen Zuheizer (1) einer Kraftfahrzeug-Klimaanlage, mit einem Energieversorgungs Leiter (2), welches der Energieversorgung dient, und einem Steuerleiter, welches der Übertragung von Steuersignalen an einen Regler (5) zur Regelung des Zuheizers (1) dient, **dadurch gekennzeichnet, dass** das Energieversorgungs-Leiter (2) gleichzeitig das Steuerungsleiter ist.

2. Steuerung nach Anspruch 1, **dadurch gekennzeichnet, dass** das Energieversorgungs-Leiter (2) mit einem Regler (5) verbunden ist.

3. Steuerung nach Anspruch 1 oder 2, **dadurch gekennzeichnet, dass** die Steuersignale die Form von Spannungsveränderungen der Energieversorgungs-Spannung (U₊) aufweisen.

4. Steuerung nach Anspruch 3, **dadurch gekennzeichnet, dass** die Steuersignale eine Amplitude (A) in einem Verhältnis zur normalen Energieversorgungs-Spannung (U₊) ohne überlagerte Steuersignale von kleiner oder gleich 0,1 aufweisen.

5. Steuerung nach einem der vorhergehenden Ansprüche, **dadurch gekennzeichnet, dass** die Steuersignale einen rechteckförmigen Verlauf über der Zeit (t) haben.

6. Steuerung nach einem der vorhergehenden Ansprüche, **dadurch gekennzeichnet, dass** der elektrische Zuheizer (1) ein PTC-Zuheizer ist.

7. Steuerung nach einem der vorhergehenden Ansprüche, **dadurch gekennzeichnet, dass** die Energieversorgungs-Spannung (U₊) ohne Steuersignale 12V+/-1V, 14V+/-1V, 24V+/-1V oder 42V+/-1V beträgt.

8. Verfahren zum Betreiben einer Steuerung für einen elektrischen Zuheizer (1) einer Kraftfahrzeug-Klimaanlage, **dadurch gekennzeichnet, dass** die Steuersignale über das Energieversorgungs-Leiter (2) mittels Überlagerung derselben über die Energieversorgungs-Spannung (U₊) übertragen werden.

## Claims

1. A control device for an additional electric heater (1) for a motor vehicle air conditioning system having an energy supply conductor (2) which serves to supply energy and a control conductor which serves to transmit control signals to a regulating device (5) for regulating the additional heater (1),
**characterised in that**
the energy supply conductor (2) is also the control conductor.

2. A control device in accordance with claim 1,
**characterised in that**
the energy supply conductor (2) is connected to a regulating device (5).

3. A control device in accordance with claim 1 or 2,
**characterised in that**
the control signals take the form of voltage variations in the energy supply voltage (U₊).

4. A control device in accordance with claim 3,
**characterised in that**
the ratio between the amplitude (A) of the control signals and that of the normal energy supply voltage (U₊) without superimposed control signals is less than or equal to 0.1.

5. A control device in accordance with one of the preceding claims,
**characterised in that**
the control signals have a rectangular curve over time (t).

6. A control device in accordance with one of the preceding claims,
**characterised in that**
the additional electric heater (1) is an PTC heater.

7. A control device in accordance with one of the preceding claims,
**characterised in that**
the energy supply voltage (U₊) without control signals is 12V+/-1V, 14V+/-1V, 24V+/-1 V or 42V+/-1 V.

8. A process for operating a control device for an additional electric heater (1) for a motor vehicle air conditioning system,
**characterised in that**
the control signals are transmitted via the energy supply conductor (2) by superimposing them over the energy supply voltage (U₊).

## Revendications

1. Commande pour un chauffage électrique additionnel (1) d'une climatisation de véhicule, comprenant un conducteur d'alimentation en énergie (2), qui sert à l'alimentation en énergie, et un conducteur de commande, qui sert à la transmission de signaux de commande à un régulateur (5) pour le réglage du chauffage additionnel (1), **caractérisée en ce que** conducteur d'alimentation en énergie (2) sert en même temps de conducteur de commande.

2. Commande selon la revendication 1, **caractérisée en ce que** le conducteur d'alimentation en énergie (2) est relié à un régulateur (5).

3. Commande selon la revendication 1 ou 2, **caractérisée en ce que** les signaux de commande présente la forme de variations de tension de la tension d'alimentation en énergie (U₊).

4. Commande selon la revendication 3, **caractérisée en ce que** les signaux de commande présentent une amplitude (A) dans un rapport à la tension d'alimentation en énergie (U₊) normale sans signaux de commande superposés qui est inférieur ou égal à 0,1.

5. Commande selon l'un quelconque des revendications précédentes, **caractérisée en ce que** les signaux de commande présentent une forme rectangulaire par rapport au temps (t).

6. Commande selon l'un quelconque des revendications précédentes, **caractérisée en ce que** le chauffage électrique (1) additionnel est un chauffage additionnel à coefficient positif de température.

7. Commande selon l'un quelconque des revendications précédentes, **caractérisée en ce que** la tension d'alimentation en énergie (U₊) sans les signaux de commande est de 12V+/-1V, 14V+/-1V, 24V+/-1V ou 42+/-1V.

8. Procédé pour l'exploitation d'une commande pour un chauffage électrique additionnel (1) d'une climatisation de véhicule, **caractérisé en ce que** les signaux de commande sont transmis au moyen du conducteur d'alimentation en énergie (2) par superposition de ces signaux au moyen de la tension d'alimentation en énergie (U₊).
